# EUROPÄISCHE PATENTSCHRIFT

(11) **EP 1 106 127 B1**
(45) Veröffentlichungstag und Bekanntmachung des Hinweises auf die Patenterteilung: **17.11.2004**
(21) Anmeldenummer: 00126806.9
(22) Anmeldetag: 07.12.2000
(51) Int. Cl.: A47J 36/16, A47J 31/00, A47J 31/18

(54) **Vorrichtung zur Zubereitung von Mokka**
Device for preparing mocha
Dispositif pour la préparation de moka

(30) Priorität: 09.12.1999 DE 19959534; 17.07.2000 DE 10034720
(43) Veröffentlichungstag der Anmeldung: 13.06.2001
(73) Patentinhaber: Lang, Christoph, 73087 Bad Boll (DE)
(72) Erfinder: Lang, Christoph, 73087 Bad Boll (DE)
(74) Vertreter: von Kirschbaum, Alexander, Dipl.-Ing.

(56) Entgegenhaltungen:
- DE-A- 19 645 564
- GB-A- 1 318 865
- US-A- 5 520 094

## Beschreibung

Die Erfindung bezieht sich auf eine Vorrichtung zur Zubereitung von Mokka, mit einem Kochgefäß, einem ihm gegenüber elektrisch isoliert gelagerten, mit dem Kochgefäß aber thermisch gekoppelten bzw. koppelbaren, elektrischen Heizkörper und einem Temperaturfühler.

Mokka wird in einem Kochgefäß durch Kochen von Wasser zubereitet, dem das Mokkamehl zugegeben ist. Für die Zubereitung türkischen Mokkas ist aus dem Prospekt Elektronik Sanayi S.A. eine elektrisch betriebene Mokkamaschine bekannt, die aus Wasser, Mokkamehl und Zucker türkischen Mokka zubereitet. Die bekannte Mokkamaschine hat aber den Nachteil, daß das Kochgefäß für den türkischen Mokka unter Netzspannung steht, wodurch die Bedienung der bekannten Mokkamaschine wegen eines möglichen Stromschlags mit erheblicher Gefahr für Leib und Leben verbunden ist.

In DE 196 45 564 wird eine Aufheizvorrichtung beschrieben für ein flüssiges Nahrungsmittel mit einem Kochgefäß, einer Heizplatte und einem Thermoelement zur Überwachung der Temperatur der Flüssigkeit. Das Kochgefäß weist einen Henkel auf, mit dem es aus der Aufheizvorrichtung entnommen werden kann. Daraufhin wird das Kochgefäß wie jede übliche Kanne oder Krug zum Eingießen der Flüssigkeit in ein entsprechendes Trinkgefäß verwendet.

Der Erfindung liegt die Aufgabe zugrunde, eine Vorrichtung der eingangs genannten Gattung so weiterzubilden, daß sie betriebssicher und weitgehend automatisch die Zubereitung türkischen, schaumigen Mokkas ermöglicht.

Erfindungsgemäß wird die Aufgabe gelöst durch die in dem Anspruch 1 aufgeführten Merkmale.

Die Erfindung weist gegenüber dem Bekannten die Vorteile auf, daß bei kompakter Bauweise eine betriebssichere Vorrichtung für die Zubereitung türkischen Mokkas zur Verfügung steht, die bis zur Fertigstellung des Mokkas keine Aufmerksamkeit verlangt, weil sie den Mokka weitgehend automatisiert zubereitet.

Weitere vorteilhafte Ausgestaltungen der Erfindung gehen aus den Unteransprüchen und der nachfolgenden Beschreibung hervor.

Die Erfindung wird an Ausführungsbeispielen anhand von Zeichnungen erläutert. Es zeigen
Fig. 1 einen Schnitt durch ein erstes Ausführungsbeispiel der Erfindung,
Fig. 2 eine Frontansicht eines zweiten Ausführungsbeispiels der Erfindung, bei dem seitliche und obere Verkleidungsteile entfernt sind,
Fig. 3 eine perspektivische Ansicht von rechts oben des Ausführungsbeispiels der Erfindung nach Fig. 2,
Fig. 4 eine perspektivische Ansicht von links oben des Ausführungsbeispiels der Erfindung nach Fig. 2,
Fig. 5 eine Seitenansicht von links des Ausführungsbeispiels der Erfindung nach Fig. 2,
Fig. 6 eine Seitenansicht von rechts des Ausführungsbeispiels der Erfindung nach Fig. 2,
Fig. 7 eine perspektivische Darstellung einer Wasserpumpe,
Fig. 8 eine perspektivische Teilansicht einer unteren Deckplatte mit Endschaltern und einem Servomotor,
Fig. 9 eine perspektivische Ansicht der Schwenkvorrichtung für den Wassertank,
Fig. 10 eine perspektivische Ansicht einer Tassensperre.

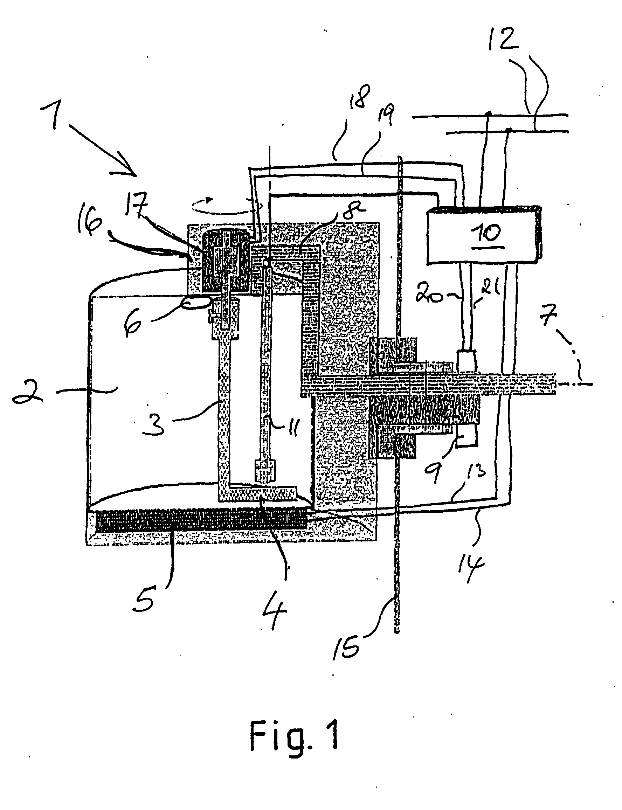

Ein erstes Ausführungsbeispiel (Fig. 1) der Erfindung bezieht sich auf eine Vorrichtung 1, die im wesentlichen ein Kochgefäß 2 zum Kochen des Wassers bzw. Mokkas mit einem, dem Kochgefäß 2 gegenüber elektrisch isoliert gelagerten, mit ihm aber thermisch gekoppelten, elektrischen Heizkörper 5 und einen in das Kochgefäß hineinragenden Temperaturfühler 11 umfaßt. In das Kochgefäß 2 ragt auch ein Rührstab 3 mit einem Rührblatt 4 hinein, wobei das Rührblatt 4 unmittelbar über dem Heizkörper 5 im Kochgefäß 2 dreht, wenn der Rührstab eingeschaltet ist. Durch die Anordnung des Rührblatts 4 sehr nahe über dem Heizkörper 5 wird die Herstellung von Schaum gefördert. Dem Antrieb des Rührstabs 3 dient ein Antriebsmotor 17.

Oben am Kochgefäß 2 endet ferner ein Einfüllrohr 8 für das Wasser, aus dem dann zusammen mit dem Mokkamehl und Zucker, die ebenfalls in das Kochgefäß 2 hineingegeben werden, unter Hitzeeinwirkung der türkische Mokka entsteht.

Das am Kochgefäß 2 endende Einfüllrohr 8 für das Wasser ist bei dem Ausführungsbeispiel der Erfindung fest mit dem Kochgefäß 2 verbunden.

Eine Steuereinheit 10, die elektrischen Strom aus dem elektrischen Netz 12 bezieht, führt über Leitungen 13, 14 dem elektrischen Heizkörper 5 elektrischen Strom solange zu, bis der türkische Mokka fertig ist. Die Steuereinheit 10 schaltet auch den Antriebsmotor 17 für den Rührstab 3 ein und aus, was über elektrische Leitungen 18, 19 geschieht.

Am Gehäuse 15 der Vorrichtung 1 sind das Kochgefäß 2 mit einer Abdeckung 16 und das Einfüllrohr 8 für das Wasser verschwenkbar gelagert. Ein Schwenkantrieb 9, der über Leitungen 20, 21 aus der Steuereinheit 10 Strom erhält und von ihr gesteuert wird, dient der Verschwenkung des Kochgefäßes 2, damit der fertige Mokka über einen Ausgießer 6 des Kochgefäßes 2 aus diesem heraus in ein anderes Gefäß, beispielsweise eine Tasse, abgegossen werden kann.

Der Ausgießer 6 bildet mit der Schwenkachse 7 des Kochgefäßes 2 einen im wesentlichen rechten Winkel.

Bei einem anderen (in den Zeichnungen nicht dargestellten) Ausführungsbeispiel der Erfindung sind das Kochgefäß 2 und der Heizkörper 5 getrennte Teile.

Bei einem ähnlichen, weiteren (in den Zeichnungen nicht dargestellten) Ausführungsbeispiel der Erfindung ist das Kochgefäß 2 herausnehmbar in die den Heizkörper 5 aufweisende Abdeckung 16 einsetzbar.

Gemäß einem ähnlichen, anderen (in den Zeichnungen nicht dargestellten) Ausführungsbeispiel der Erfindung ist das Kochgefäß 2 - nach Wegnahme des Heizkörpers 5 - nach unten von der Vorrichtung 1 bewegbar und zum Ausgießen verschwenkbar gelagert.

Nach einem ähnlichen, weiteren (in den Zeichnungen nicht dargestellten) Ausführungsbeispiel der Erfindung ist das Kochgefäß 2 - nach Wegnahme des Heizkörpers 5 - nach unten von der Vorrichtung 1 wegnehmbar gelagert. Dies erleichtert die Reinigung des Kochgefäßes 2.

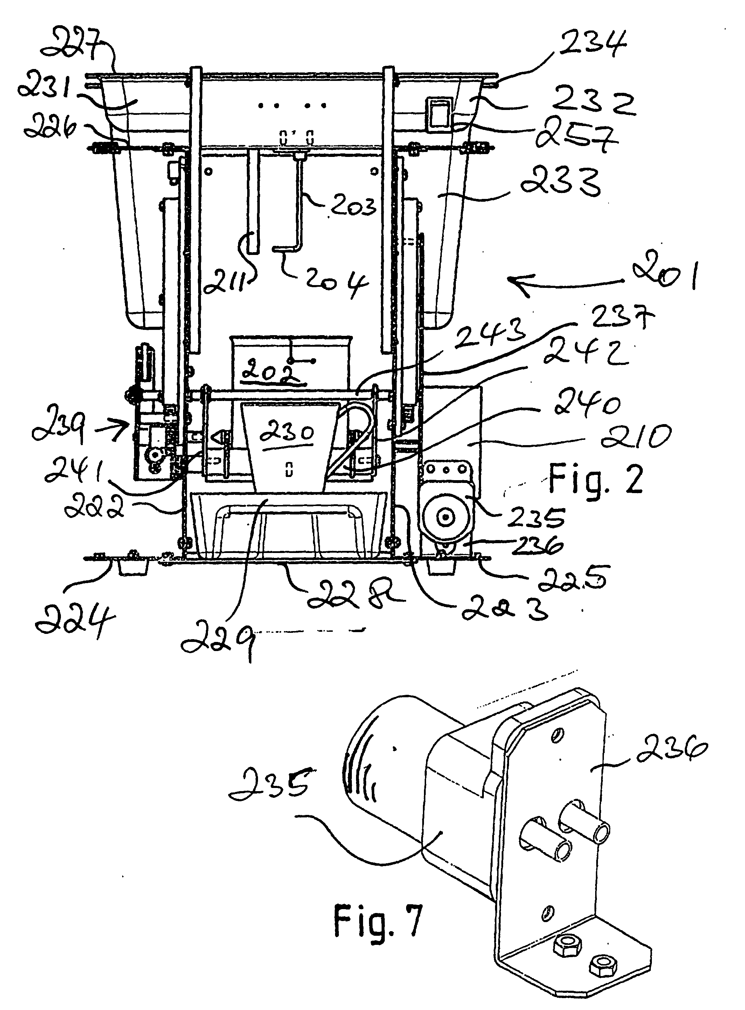

Bei einem anders aufgebauten Ausführungsbeispiel (Fig. 2, 3, 4) der Erfindung, bei dem wegen der Klarheit der Darstellung seitliche und obere Verkleidungsteile entfernt sind, umfaßt eine Vorrichtung 201 ein rahmenförmiges Gestell, gebildet aus einem linken Seitenteil 222 und einem rechten Seitenteil 223, die jeweils unten in nach außen wegweisende Fußteile 224, 225 übergehen und oben mittels eines unteren Deckblechs 226 und eines oberen Deckblechs 227 auf Abstand gehalten werden und so miteinander verbunden sind. Unten sind die beiden Seitenteile 222, 223 mittels einer Bodenplatte 228 auf Abstand miteinander verbunden. Zwischen den beiden Seitenteilen 222, 223, und zwar zwischen ihren Fußteilen 224, 225 ist Raum für eine aufgeständerte Lochplatte 229 zur Aufnahme eines Trinkgefäßes 230, beispielsweise eine Tasse oder einen Becher, vorhanden.

Hinter der aufgeständerten Lochplatte 229 zur Aufnahme eines Trinkgefäßes 230 befindet sich ein Kochgefäß 202 zur Zubereitung von Mokka. Das Kochgefäß 202 steht auf einer Liftvorrichtung 239, deren Aufbau und Funktion weiter unten erklärt werden werden. Die Liftvorrichtung 239 beinhaltet auch einen (in der Zeichnung nicht dargestellten) Heizkörper für die Zubereitung des Mokkas.

An dem rechten Seitenteil 223 (Fig. 2, 3, 6) ist auf Abstand eine Tragplatte 237 angebracht, auf der eine Steuereinheit 210 sitzt. Letztere steuert programmartig die Arbeitsabläufe in der Vorrichtung 201 bei der Zubereitung von Mokka.

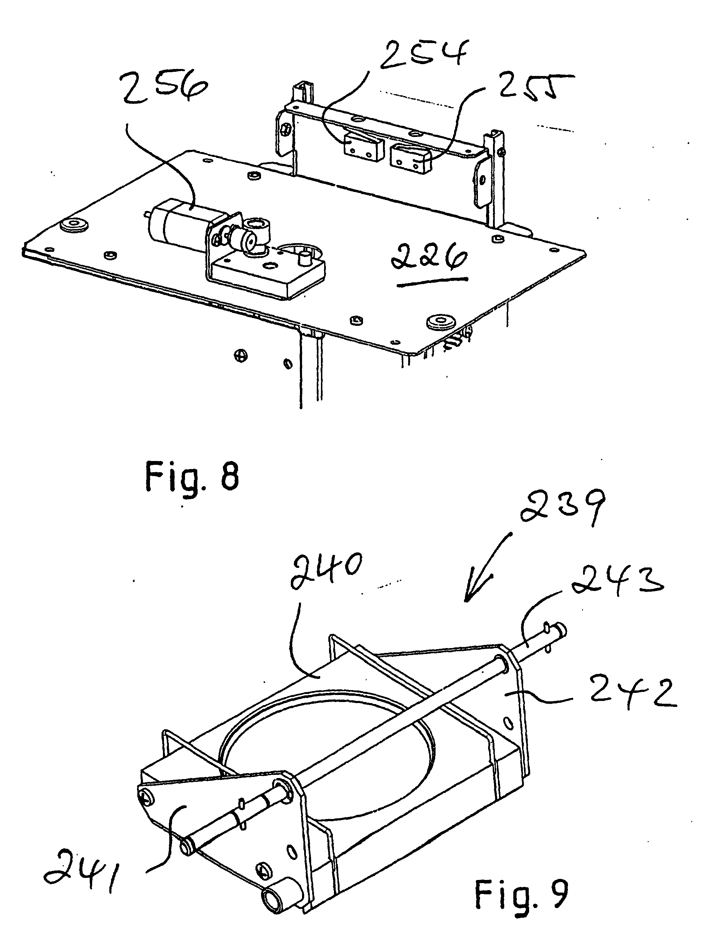

Auf dem Fußteil 225 des rechten Seitenteils 223 der Vorrichtung 201 sitzt ein Winkelblech 236 (Fig. 2, 3, 6), das eine Wasserpumpe 235 (Fig. 7) trägt. An ihr sind (in den Zeichnungen nicht dargestellte) Wasserschläuche angeschlossen, mit deren Hilfe programmgesteuert Wasser aus dem Wassertank 233 in das Kochgefäß 202 gefördert wird. Die Wasserpumpe 235 wird von der Steuereinheit 210 ein- und ausgeschaltet.

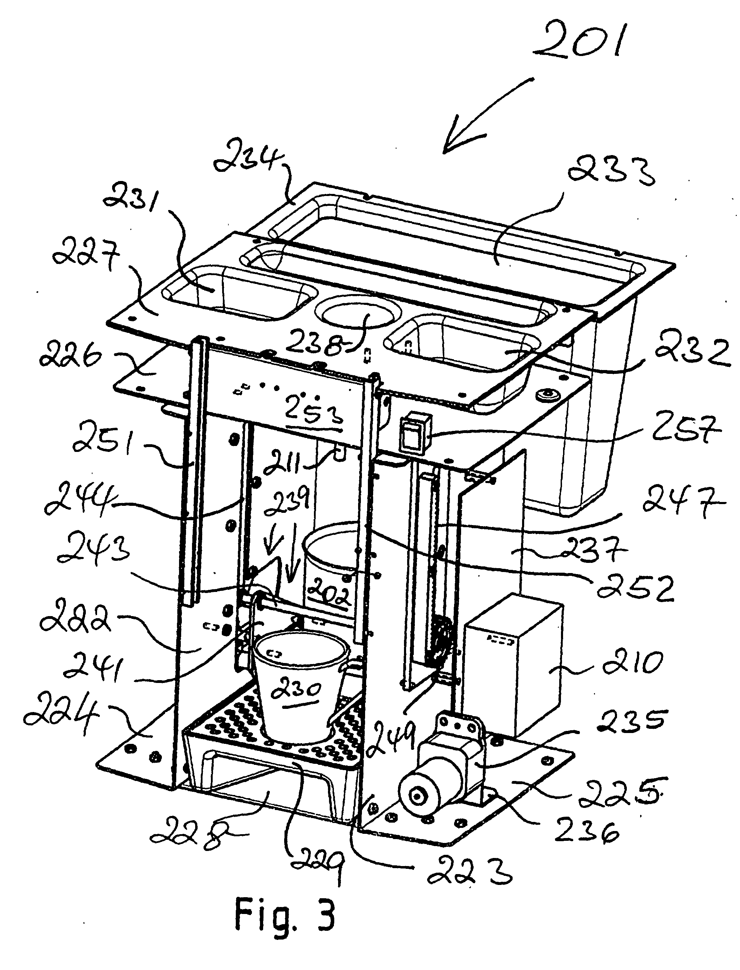

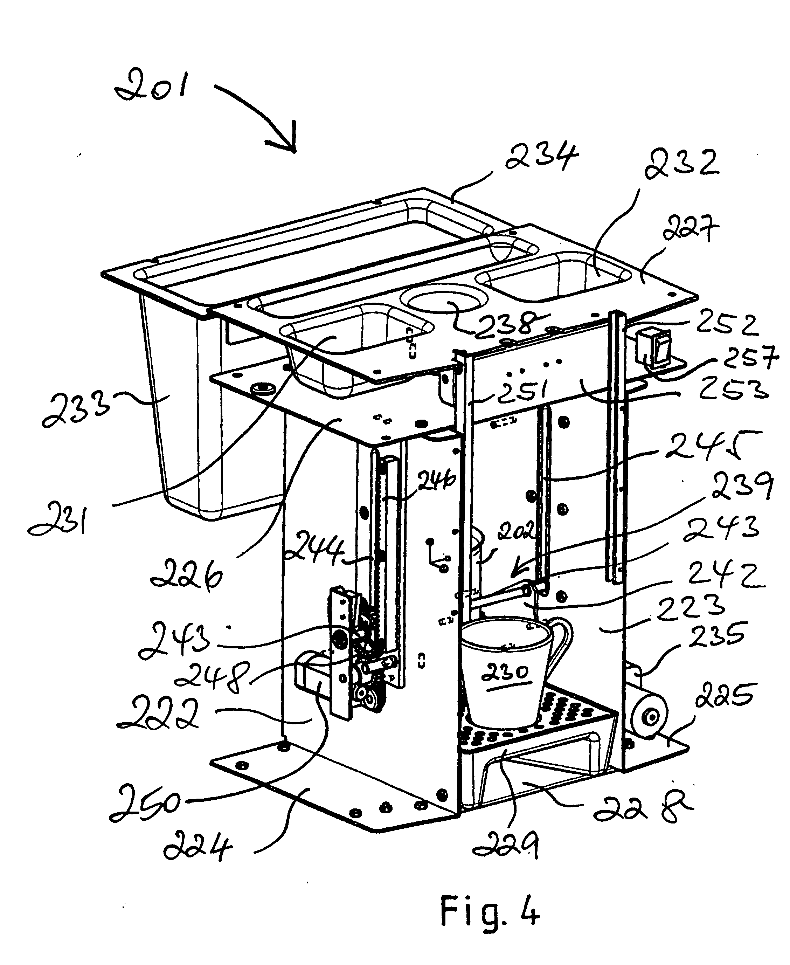

Das obere Deckblech 227 hat eine Aufnahme 231 für Kaffee- bzw. Mokkamehl sowie eine weitere Aufnahme 232 für Zucker. Ferner weist das obere Deckblech 227 eine obere Öffnung 238 (Fig. 3, 4) auf, unter der im unteren Deckblech 226 eine (in den Zeichnungen nicht dargestellte) entsprechende Öffnung vorgesehen ist, die mit der oberen Öffnung 238 fluchtet.

Von dem unteren Deckblech 226 weist ein drehbar gelagerter Rührstab 203 (Fig. 2) nach unten weg, an dessen unterem Ende ein Rührblatt 204 vorgesehen ist. Ferner weist von dem unteren Deckblech 226 ein Temperaturfühler 211 (Fig. 2, 3) nach unten weg.

Auf dem unteren Deckblech 226 sitzt ein Antriebsmotor 256 für den Antrieb des Rührstabs 203, der von der Steuereinheit 210 programmabhängig ein- und ausgeschaltet wird.

An dem oberen Deckblech 227 ist eine Tragplatte 234 angebracht oder bildet mit ihr ein einstückiges Teil, die einen Wassertank 233 trägt.

Ein erster Holm 251 ist oben vorne an dem einen Seitenteil 222 angebracht, ein zweiter Holm 252 ist oben vorne an dem anderen Seitenteil 223 befestigt. An die beiden Holme 251, 252 ist eine Halteplatte 253 montiert, die ihrerseits Endschalter 254, 255 trägt.

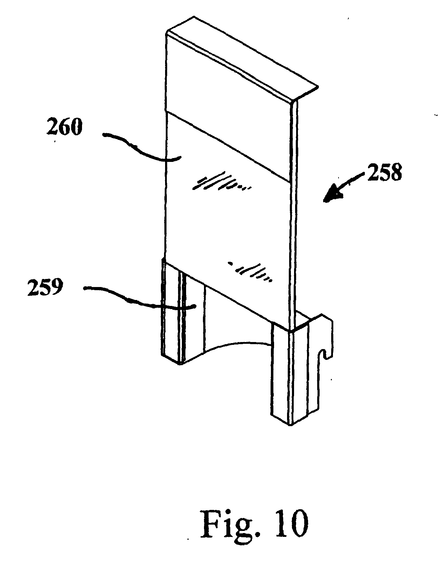

Die Liftvorrichtung 239 (Fig. 2, 3, 4, 5, 6, 9) umfaßt neben dem vorerwähnten Heizkörper zur Aufnahme des Kochgefäßes 202 eine Basisplatte 240, an der zu beiden Seiten jeweils ein Halteteil 241, 242 (Fig. 9) aus Flachmaterial angebracht ist. Jeweils durch das obere Ende eines jeden Halteteils 241, 242 läuft eine Achse 243 durch die Halteteile 241, 242 hindurch. Sie ist mit den beiden Halteteilen 241, 242 fest verbunden.

An dem einen Seitenteil 222 befinden sich ein vorzugsweise senkrecht ausgerichteter Schlitz 244 und eine parallel hierzu ausgerichtete, erste Zahnstange 246. An dem anderen Seitenteil 223 ist ein vorzugsweise senkrecht ausgerichteter Schlitz 245 vorgesehen, zu dem parallel ausgerichtet eine zweite Zahnstange 247 an dem anderen Seitenteil 223 angebracht ist.

Außerhalb des einen Seitenteils 222 ist am einen freien Ende der Achse 243 auf dieser laufend ein erstes Zahnrad 248 vorgesehen, das von einem Elektromotor 250 antreibbar ist. Außerhalb des anderen Seitenteils 223 ist am anderen freien Ende der Achse 243 auf dieser laufend ein zweites Zahnrad 249 vorhanden. Das erste Zahnrad 248 befindet sich mit der ersten Zahnstange 246, das zweite Zahnrad 249 mit der zweiten Zahnstange 247 in Eingriff.

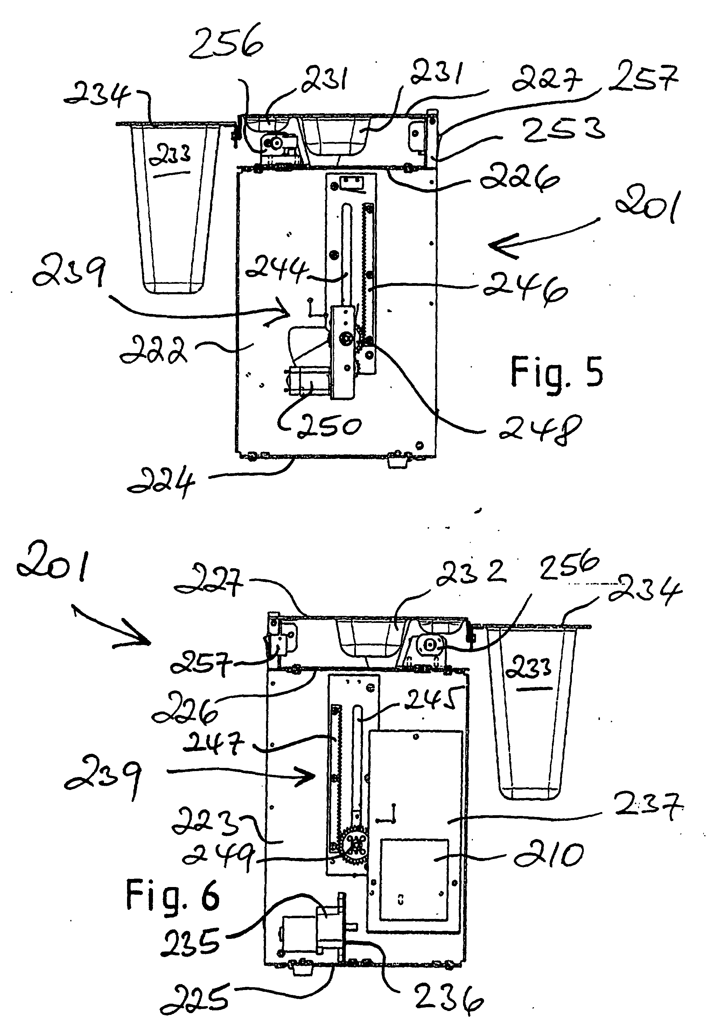

Auf dem unteren Deckblech 226 befindet sich ein Antriebsmotor 256 (Fig. 5, 6, 8) zum Antrieb des Rührstabs 203 mit seinem Rührblatt 204.

Ein Netzschalter 257 (Fig. 2, 3, 4, 5, 6) dient der Vorrichtung 201, insbesondere der Steuereinheit 210, zum Ein- und Ausschalten.

Wegen der Klarheit der Darstellung in den Zeichnungen wurden elektrische Leitungen sowie Wasserschläuche in den Zeichnungen nicht gezeichnet.

### Funktionsweise

Soll mit dem anders aufgebauten, anhand der Fig. 2 bis 9 beschriebenen Ausführungsbeispiel der Erfindung, also der Vorrichtung 201, Mokka zubereitet werden, so wird der Netzschalter 257 (Fig. 2, 3, 4) eingeschaltet, wodurch die Steuereinheit 210 (Fig. 2, 3, 6) aus einem (in den Zeichnungen nicht dargestellten Netz) Strom erhält.

Die Steuereinheit 210 setzt die Liftvorrichtung 239 dadurch in Gang, daß der Elektromotor 250 elektrischen Strom erhält. Dadurch wird das Zahnrad 248 (Fig. 4) unmittelbar oder über weiteren Zahnradtrieb in geeigneter Drehrichtung in Drehung versetzt, bei der sich das Zahnrad 248 an der Zahnstange 246 nach oben bewegt. Es nimmt die Achse 243 mit, die in den beiden Schlitzen 244, 245 geführt wird. Der Führung dient auch das Zahnrad 249 an der anderen Seite der Vorrichtung 201 (Fig. 3, 6), das sich mit der Zahnstange 247 in Eingriff befindet. Die Achse 243 nimmt die Basisplatte 240 mit, wodurch das Kochgefäß 202 ebenfalls mit nach oben befördert wird, und zwar so weit, bis der Temperaturfühler 211 und der Rührstab 203 mit seinem Rührblatt 204 weit in das Kochgefäß 202 eintauchen.

Nun wird programmgemäß Wasser aus dem Wassertank 233 in das Kochgefäß 202 eingefüllt, es werden von Hand aus den Aufnahmen 231, 232 Mokkamehl und Zucker durch die Öffnung 238 hindurch in das Kochgefäß gegeben. Die Steuereinheit schaltet den Heizkörper ein, der Mokka wird zubereitet, wobei über den Temperaturfühler 211 die Temperatur des Mokkas gemessen und an die Steuereinheit 210 gemeldet sowie mit Hilfe des Rührstabs 203 der Mokka umgerührt werden.

Nach vorgegebener Zeitdauer werden der Heizkörper durch die Steuereinheit 210 abgeschaltet und der Rührstab 203 stillgesetzt. Die Steuereinheit schaltet den Elektromotor 250 mit umgekehrter Drehrichtung ein, wodurch die Liftvorrichtung 239 mit dem Kochgefäß 202 nach unten geht. Unten angekommen, legt sich die Achse 243 an die Enden der Schlitze 244, 245 an, wodurch eine Schnecke, die mit dem Zahnrad 248 in Eingriff steht und vom Elektromotor 250 weiter angetrieben wird, an dem Zahnrad 248 hinaufsteigt. Dadurch wird die Basisplatte 240 gekippt, beim Ausführungsbeispiel der Erfindung um 95°, und zwar so, daß der fertige Mokka in das Trinkgefäß 230 fließen kann. Nach Entleerung des Kochgefäßes 202 geht die Basisplatte 240 programmgesteuert wieder in ihre Ausgangslage zurück, von der aus ein neuer Arbeitsgang für die Zubereitung eines Mokkas gestartet werden kann.

Bei einem anderen (in den Zeichnungen nicht dargestellten) Ausführungsbeispiel der Erfindung steht das Kochgefäß in der Vorrichtung unten über dem Heizkörper, während auf einer Liftvorrichtung gelagerte Mittel, nämlich ein Rührstab mit Rührblatt, Antriebsmotor für den Rührstab sowie ein Temperaturfühler jeweils zum Zweck der Zubereitung des Mokkas nach unten in das Kochgefäß abgesenkt und nach Fertigstellung des Mokkas wieder nach oben zurückgefahren werden.

Die Holme 251, 252 (Fig. 3,4) sind vorzugsweise als U-Schienen ausgebildet, die dem Halten einer Tassensperre 258 (Fig. 10) dienen. Letztere hat ein unteres, bogenförmiges Führungsteil 259 zur Positionierung des Trinkgefäßes 230 auf der Lochplatte 229 (Fig. 3, 4) und darüber eine transparente Platte 260, durch die das Eingießen des Moccas in das Trinkgefäß 230 beobachtet werden kann.

## Patentansprüche

1. Vorrichtung zur Zubereitung von Mokka mit einem Kochgefäß (2), einem ihm gegenüber elektrisch isoliert gelagerten, mit dem Kochgefäß (2) aber thermisch gekoppelten, elektrischen Heizkörper (5), einem Temperaturfühler (11) und einem in das Kochgefäß (2) hineinragenden, motorgetriebenen Rührstab (3),
**dadurch gekennzeichnet, dass**
das Kochgefäß (2) zum Abgießen des Mokkas um eine Schwenkachse (7) verschwenkbar in einem Gehäuse (15) der Vorrichtung (1) gelagert ist.

2. Vorrichtung nach Anspruch 1, **dadurch gekennzeichnet, dass** das für das Rühren des Mokkas wirksame Blatt (4) des Rührstabs (3) unmittelbar über dem Heizkörper (5) vorgesehen ist.

3. Vorrichtung nach Anspruch 1 oder 2, **dadurch gekennzeichnet, dass** das Kochgefäß (2) einen Ausgießer (6) hat, der mit der Schwenkachse (7) des Kochgefäßes (2) einen im Wesentlichen rechten Winkel bildet.

4. Vorrichtung nach einem der Ansprüche 1 - 3, **dadurch gekennzeichnet, dass** für die Verschwenkung des Kochgefäßes (2) ein elektrischer Schwenkantrieb (9) vorgesehen ist.

5. Vorrichtung nach einem der Ansprüche 1 - 4, **dadurch gekennzeichnet, dass** ein im Kochgefäß (2) endendes Einfüllrohr (8) für das Wasser fest mit dem Kochgefäß (2) verbunden ist.

6. Vorrichtung nach einem der Ansprüche 1 - 5, **dadurch gekennzeichnet, dass** das Kochgefäß (2) herausnehmbar in die den Heizkörper (5) aufweisende Abdeckung (16) einsetzbar ist.

7. Vorrichtung nach einem der Ansprüche 1 - 5, **dadurch gekennzeichnet, dass** das Kochgefäß (2) - nach Wegnahme des Heizkörpers (5) - nach unten von der Vorrichtung (1) bewegbar und zum Ausgießen verschwenkbar gelagert ist.

8. Vorrichtung nach einem der Ansprüche 1 - 6, **dadurch gekennzeichnet, dass** das Kochgefäß (2) - nach Wegnahme des Heizkörpers (5) - nach unten von der Vorrichtung (1) wegnehmbar gelagert ist.

9. Vorrichtung nach einem der Ansprüche 1 - 8, **dadurch gekennzeichnet, dass** eine Liftvorrichtung (239) mit einem Heizkörper vorgesehen ist, die dem Anheben des Kochgefäßes (202) zum Zweck der Mokkazubereitung und Absenken zum Entleeren des Kochgefäßes (202) dient.

10. Vorrichtung nach einem der Ansprüche 1 - 9, **dadurch gekennzeichnet, dass** ein Wassertank (233) und eine Wasserpumpe (235) vorgesehen sind, die einer programmabhängigen Zuführung von Wasser zum Kochgefäß (202) dienen.

11. Vorrichtung nach einem der Ansprüche 1 - 10, **dadurch gekennzeichnet, dass** eine Steuereinheit (210) vorhanden ist, welche die Liftvorrichtung (239), die Wasserpumpe (235) und den Vorgang der Zubereitung des Mokkas steuert.

12. Vorrichtung nach einem der Ansprüche 1 - 11, **dadurch gekennzeichnet, dass** im oberen Bereich der Vorrichtung (201) Aufnahmen (231, 232) für die Lagerung von Mokkamehl und Zucker vorhanden sind.

13. Vorrichtung nach einem der Ansprüche 1 - 12, **dadurch gekennzeichnet, dass** die Liftvorrichtung einen programmgesteuerten Elektromotor (250) sowie mindestens zwei Zahnräder (248, 249) und zu beiden Seiten der Vorrichtung (201) je eine an Seitenteilen (222, 223) fest angebrachte Zahnstange (246, 247) umfasst, wobei Elektromotor (250) und Zahnräder (248, 249) an der Basisplatte (240) gelagert sind.

14. Vorrichtung nach einem der Ansprüche 1 - 13, **dadurch gekennzeichnet, dass** die beiden Zahnräder (248, 249) auf einer zu der Liftvorrichtung (239) gehörenden Achse (243) laufen, die in Schlitzen (244, 245) in den Seitenteilen (222, 223) der Vorrichtung (201) geführt sind.

15. Vorrichtung nach Anspruch 14, **dadurch gekennzeichnet, dass** die Achse (243) der Abstützung des Kochgefäßes (202) während des Ausgießens des fertigen Mokkas in ein Trinkgefäß (230) dient.

16. Vorrichtung nach einem der Ansprüche 1 - 15, **dadurch gekennzeichnet, dass** Kochgefäß (2, 202) und Heizkörper getrennte Teile sind.

17. Vorrichtung nach einem der Ansprüche 1 - 16, **dadurch gekennzeichnet, dass** eine Steuereinheit (10, 210) zum Ein- und Ausschalten der Vorrichtung (1, 201), des Heizkörpers und des Schwenkantriebs (9) bzw. der Liftvorrichtung vorgesehen ist.

18. Vorrichtung nach einem der Ansprüche 1 - 17, **dadurch gekennzeichnet, dass** eine Tassensperre (258) zum Positionieren des Trinkgefäßes (230) auf der Lochplatte (229) vorgesehen ist.

19. Vorrichtung nach Anspruch 18, **dadurch gekennzeichnet, dass** die Tassensperre (258) ein bogenförmiges Führungsteil (259) für das Trinkgefäß (230) und darüber eine transparente Platte (260) aufweist.

20. Vorrichtung nach einem der Ansprüche 1 - 19, **dadurch gekennzeichnet, dass** das Kochgefäß in der Vorrichtung unten über dem Heizkörper steht und auf einer Liftvorrichtung gelagerte Mittel, nämlich ein Rührstab mit Rührblatt, Antriebsmotor für den Rührstab sowie ein Temperaturfühler nach unten in das Kochgefäß absenk- und wieder nach oben zurückfahrbar gelagert sind.

## Claims

1. A device for preparing mocha coffee, comprising a cooking vessel (2), an electrical heating body (5) supported relative to the cooking vessel (2) while electrically insulated therefrom, however thermally coupled to the cooking vessel (2), a temperature sensor (11), and a motor-driven stirrer rod (3) protruding into the cooking vessel (2),
**characterized in that**, for allowing the mocha coffee to be poured out, the cooking vessel (2) is supported to be swivelled about a swivel axis (7) in a casing (15) of the device (1).

2. The device according to claim 1, **characterized in that** the blade (4) of the stirrer rod (3) effective for the stirring of the mocha coffee is provided immediately above the heating body (5).

3. The device according to claim 1 or 2, **characterized in that** the cooking vessel (2) is provided with a pouring spout (6) forming a substantially right angle with the swivel axis (7) of the cooking vessel (2).

4. The device according to any one of claims 1 - 3, **characterized in that** an electrical swivel drive (9) is provided for the swivelling of the cooking vessel (2).

5. The device according to any one of claims 1 - 4, **characterized in that** a filling tube (8) provided for the water and terminating in the cooking vessel (2) is tightly connected to the cooking vessel (2).

6. The device according to any one of claims 1 - 5, **characterized in that** the cooking vessel (2) is removably insertable into the covering (16) provided with the heating body (5).

7. The device according to any one of claims 1 - 5, **characterized in that** the cooking vessel (2), after removal of the heating body (5), is supported to be moved downwardly from the device (1) and to be swivelled for pouring.

8. The device according to any one of claims 1 - 6, **characterized in that** the cooking vessel (2), after removal of the heating body (5), is supported to be downwardly removed from the device (1).

9. The device according to any one of claims 1 - 8, **characterized in that** a lifting device (239) is provided, comprising a heating body and arranged to lift the cooking vessel (202) for mocha coffee preparation, and to lower the vessel for emptying the cooking vessel (202).

10. The device according to any one of claims 1 - 9, **characterized in that** a water tank (233) and a water pump (235) are provided, serving for programme-dependant feeding of water to the cooking vessel (202).

11. The device according to any one of claims 1 - 10, **characterized in that** a control unit (210) is provided for controlling the lifting device (239), the water pump (235) and the process of the mocha coffee preparation.

12. The device according to any one of claims 1 - 11, **characterized in that** receptacles (231,232) for storing mocha coffee flour and sugar are provided in the upper region of the device (201).

13. The device according to any one of claims 1 - 12, **characterized in that** the lifting device comprises a programme-controlled electric motor (250) as well as at least two gear wheels (248,249) and, on both sides of the device (201), a respective gear rack (246,247) fixed to side portions (222,223), wherein the electric motor (250) and the gear wheels (248,249) are supported on the base plate (240).

14. The device according to any one of claims 1 - 13, **characterized in that** the two gear wheels (248,249) are arranged to run on an axle (243) belonging to the lifting device (239) and are guided in slots (244,245) in the side portions (222,223) of the device (201).

15. The device according to claim 14, **characterized in that** the axle (243) serves for support of the cooking vessel (202) during the pouring out of the finished mocha into a drinking vessel (230).

16. The device according to any one of claims 1 - 15, **characterized in that** the cooking vessel (2,202) and the heating body are separate parts.

17. The device according to any one of claims 1 - 16, **characterized in that** a control unit (10,210) is provided for switching on and switching off the device (1,201), the heating body, and the swivel drive (9) and the lifting device, respectively.

18. The device according to any one of claims 1 - 17, **characterized in that** a cup blockage (258) is provided for positioning the drinking vessel (230) on the perforated plate (229).

19. The device according to claim 18, **characterized in that** the cup blockage (258) comprises a curved guide part (259) for the drinking vessel (230) and a transparent plate (260) thereabove.

20. The device according to any one of claims 1 - 19, **characterized in that** the cooking vessel is provided to stand in the lower region of the device above the heating body and that means supported by a lifting device, notably a stirrer rod with stirrer blade, a drive motor for the stirrer rod as well as a temperature sensor, are supported to be lowered downwardly into the cooking vessel and to be returned upwardly again.

## Revendications

1. Dispositif pour la préparation de moka, comportant un récipient de préparation (2), un corps chauffant (5) électrique, logé de façon électriquement isolante du récipient de préparation, mais couplé thermiquement au récipient de préparation (2), un capteur de température (11) et un agitateur (3) dépassant à l'intérieur du récipient de préparation (2) et entraîné par un moteur, **caractérisé en ce que** le récipient de préparation (2), pour verser le moka, est logé de façon pivotante autour d'un axe de pivotement (7) dans un boîtier (15) du dispositif (1).

2. Dispositif selon la revendication 1, **caractérisé en ce que** la pale (4) de l'agitateur (3) permettant de mélanger le moka est prévue directement au-dessus du corps chauffant (5).

3. Dispositif selon la revendication 1 ou 2, **caractérisé en ce que** le récipient de préparation (2) possède un bec verseur (6), qui forme avec l'axe de pivotement (7) du récipient de préparation (2) un angle pour l'essentiel droit.

4. Dispositif selon l'une quelconque des revendications 1 à 3, **caractérisé en ce qu'**il est prévu pour le basculement du récipient de préparation (2) un entraînement de pivotement (9) électrique.

5. Dispositif selon l'une quelconque des revendications 1 à 4, **caractérisé en ce qu'**un tube de remplissage (8) pour l'eau, débouchant dans le récipient de préparation (2), est relié fixement au récipient de préparation (2).

6. Dispositif selon l'une quelconque des revendications 1 à 5, **caractérisé en ce que** le récipient de préparation (2) est amovible dans le revêtement (16) présentant le corps chauffant (5).

7. Dispositif selon l'une quelconque des revendications 1 à 5, **caractérisé en ce que** le récipient de préparation (2), après retrait du cors chauffant (5), est logé de façon mobile vers le bas par rapport au dispositif (1) et de façon pivotante pour le versement.

8. Dispositif selon l'une quelconque des revendications 1 à 6, **caractérisé en ce que** le récipient de préparation (2), après retrait du corps chauffant (5), est logé de façon amovible vers le bas par rapport au dispositif (1).

9. Dispositif selon l'une quelconque des revendications 1 à 8, **caractérisé en ce qu'**il est prévu un dispositif de levage (239) doté d'un corps chauffant, qui sert à soulever le récipient de préparation (202) afin de permettre la préparation du moka ainsi que l'abaissement et le vidage du récipient de préparation (202).

10. Dispositif selon l'une quelconque des revendications 1 à 9, **caractérisé en ce qu'**il est prévu un réservoir d'eau (233) et une pompe à eau (235), qui servent à acheminer l'eau de façon programmée vers le récipient de préparation (202).

11. Dispositif selon l'une quelconque des revendications 1 à 10, **caractérisé en ce qu'**il est prévu une unité de commande (210), qui commande le dispositif de levage (239), la pompe à eau (235) et le processus de préparation du moka.

12. Dispositif selon l'une quelconque des revendications 1 à 11, **caractérisé en ce qu'**il est prévu dans la zone supérieure du dispositif (201) des logements (231, 232) permettant d'accueillir la poudre de moka et le sucre.

13. Dispositif selon l'une quelconque des revendications 1 à 12, **caractérisé en ce que** le dispositif de levage comprend un moteur électrique (250) commandé par programme, ainsi qu'au moins deux roues dentées (248, 249) et, des deux côtés du dispositif (201), respectivement une crémaillère (246, 247) montée de façon fixe au niveau de parties latérales (222, 223), le moteur électrique (250) et les roues dentées (248, 249) étant logés au niveau de la plaque de base (240).

14. Dispositif selon l'une quelconque des revendications 1 à 13, **caractérisé en ce que** les deux roues dentées (248, 249) sont mobiles sur un axe (243) appartenant au dispositif de levage (239), les axes étant insérés dans des fentes (244, 245) formées dans les parties latérales (222, 223) du dispositif (201).

15. Dispositif selon la revendication 14, **caractérisé en ce que** l'axe (243) sert à soutenir le récipient de préparation (202) pendant le versement du moka préparé dans un récipient de boisson (230).

16. Dispositif selon l'une quelconque des revendications 1 à 15, **caractérisé en ce que** le récipient de préparation (2, 202) et le corps chauffant sont des pièces distinctes.

17. Dispositif selon l'une quelconque des revendications 1 à 16, **caractérisé en ce qu'**il est prévu une unité de commande (10, 210) pour l'activation et la désactivation du dispositif (1, 201), du corps chauffant et de l'entraînement de pivotement (9) ou du dispositif de levage.

18. Dispositif selon l'une quelconque des revendications 1 à 17, **caractérisé en ce qu'**il est prévu un blocage de tasse (258) pour le positionnement du récipient de boisson (230) sur la plaque perforée (229).

19. Dispositif selon la revendication 18, **caractérisé en ce que** le blocage de tasse (258) présente une partie de guidage (259) en forme d'arc pour le récipient de boisson (230) et sur celle-ci, une plaque transparente (260).

20. Dispositif selon l'une quelconque des revendications 1 à 19, **caractérisé en ce que** le récipient de préparation se trouve dans la partie inférieure du dispositif au-dessus du corps chauffant et **en ce que** des moyens, c'est-à-dire un agitateur avec pale d'agitation, un moteur d'entraînement pour l'agitateur et un capteur de température, sont logés sur un dispositif de levage de façon à pouvoir être abaissés puis à nouveau remontés dans le récipient de préparation.
